(19) **Europäisches Patentamt / European Patent Office / Office européen des brevets**

(11) **EP 4 523 984 B1**

(12) **EUROPEAN PATENT SPECIFICATION**

(45) Date of publication and mention
of the grant of the patent:
**10.06.2026  Bulletin 2026/24**

(21) Application number: **23196706.8**

(22) Date of filing: **12.09.2023**

(51) International Patent Classification (IPC):
*B60T 13/74* (2006.01)    *F16D 65/16* (2006.01)
*F16D 65/18* (2006.01)    *F16D 65/22* (2006.01)
*B60T 17/08* (2006.01)    *F16D 65/28* (2006.01)

(52) Cooperative Patent Classification (CPC):
**B60T 13/741; B60T 13/743; B60T 17/083;
B60T 17/085; F16D 65/28;** F16D 2121/26;
F16D 2125/40; F16D 2125/50

(54) **ELECTROMECHANICAL BRAKE ACTUATOR FOR A VEHICLE BRAKE**

ELEKTROMECHANISCHER BREMSAKTUATOR FÜR EINE FAHRZEUGBREMSE

ACTIONNEUR DE FREIN ÉLECTROMÉCANIQUE POUR FREIN DE VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**19.03.2025  Bulletin 2025/12**

(73) Proprietor: **KNORR-BREMSE Systeme für
Nutzfahrzeuge GmbH
80809 München (DE)**

(72) Inventors:
• **HERICHER, Stéphane
14670 Basseneville (FR)**
• **CHANUDET, Nathan
29252 Plouezoc'h (FR)**

(56) References cited:
**EP-B1- 2 566 734        US-A1- 2010 078 274
US-A1- 2010 082 213    US-A1- 2021 253 078
US-B1- 6 267 207          US-B1- 6 722 477**

**Description**

The invention relates to an electromechanical brake actuator for a vehicle brake of a vehicle according to the preamble of claim 1, as well as to a vehicle brake of a vehicle according to claim 14, as well as to a vehicle with a vehicle brake according to claim 15.

An electromechanical brake actuator is known from EP 2 566 734 B1. There, the braking force applied by the spring brake cylinder is used, for example, for parking braking of a vehicle already braked by the service brake or as an auxiliary braking force in the event of failure of the service brake. The electric motor serves to both tension and release the storage spring, i.e., the electric motor works against the action of the storage spring to release the spring brake and, on the other hand, allows the tensioning movement of the storage spring to be assisted so that storage spring can apply the tensioning force. Therefore, the storage spring applies the braking force on its own.

A generic electromechanical brake actuator is known from US 2021/253078A1. US2010/078274A1 discloses a parking brake mechanism with an electrically powered actuator, an extensible device driveably conntected to the electric powered actuator and able to extend and retract and be held in place in an extended position. US 6 267 207 B1 discloses an apparatus for actuating a parking brake, which has an electric motor and a coupling element which is movement-coupled with the motor drive shaft. EP 2 566 734 B1 discloses a spring accumulator brake cylinder having an electric motor disposed within the accumulator spring. US 6 722 477 B1 discloses a brake actuator for rail vehicle calipers for a disc brake which comprises a service brake unit with an electromotive drive system for clamping and releasing the brake. US 2010/082213A1 discloses a method for applying a parking brake mechanism with an electric actuator.

The object of the invention is developing the electromechanical brake actuator in such a way that it can be used more flexibly. Furthermore, a vehicle brake of a vehicle comprising at least one such electromechanical brake actuator as well as a vehicle with such a vehicle brake are also to be provided.

This object is solved by claims 1, 14 and 15.

Disclosure of the invention

The invention starts from an electromechanical brake actuator for a vehicle brake of a vehicle, comprising at least:

a) a spring brake with a spring brake cylinder, in which a spring brake piston actuable by at least one storage or storage spring is displaceably arranged for applying or clamping and releasing the spring brake, the storage spring applying a storage spring force to the spring brake piston,
b) an electronic controller and at least one electric motor with a rotor controlled by the electronic controller,
c) force transmission means designed and arranged for transmitting and converting the rotary motion of the rotor of the electric motor into a linear motion of the spring brake piston and for transmitting a motor force of the electric motor to the spring brake piston, wherein
d) the electronic controller, the electric motor and the force transmission means interact and are designed in such a way that, in particular, at least in a clamping position of the spring brake piston, a total force acting on the spring brake piston is composed of the storage spring force, which can be applied to the spring brake piston by the storage spring and the motor force, the direction of the motor force being in the same direction or in the opposite direction to the direction of the storage spring force, where
e) the electronic controller, the electric motor and the force transmission means cooperate and are designed in such a way that the motor force and the storage spring force act in parallel on the spring brake piston.

The electromechanical brake actuator of the invention combines a passive brake part, namely the spring brake with the spring brake cylinder, which supplies the storage spring force through the tensioned at least one storage spring, with an active brake part, namely the electric motor, which supplies the motor force through energization, which then forms part of the total force generated by the electromechanical brake actuator.

The spring brake piston's clamping or applied position forms a first end position of the spring brake piston, in which the spring brake is fully applied or clamped. A second end position of the spring brake piston forms a release position in which the spring brake is fully released. The spring brake piston then moves between the release position and the clamping position when the spring brake is released or applied.

In general, the motor force can be zero and non-zero, and in the latter case the motor force can act in the same direction or in the opposite direction with respect to the effective direction of the storage spring force.

For example, the electronic controller, the electric motor and the force transmission means can interact and be designed in such a way that, in particular, at least in the clamping position of the spring brake piston

a) in a force addition mode, adding the motor force to the storage spring force to produce a first total force $G_1$ at or on the spring brake piston that is greater than the storage spring force that can be applied by the storage spring, or

b) in a force subtraction mode, subtracting the motor force from the storage spring force to produce a second total force $G_2$ at or on the spring brake piston that is smaller than the storage spring force that can be applied by the storage spring.

In case a) above, the electric motor acts pushing, with the motor force acting in the same direction with respect to the direction of the storage spring force. In case b) above, the electric motor acts pulling, with the motor force acting in the opposite direction with respect to the direction of the storage spring force.

Since the storage spring force is generally defined or predetermined by the geometry and material of the at least one storage spring, it is advantageous and covered by the invention, that the electric motor to be controlled or regulated by the electronic controller as a function of a stroke X of the spring brake piston in order to change the total force G comprising the storage spring force and motor force as a function of the stroke X of the spring brake piston or also to keep it constant. Preferably for each stroke X of the spring brake piston, the motor force of the electric motor can then be adjusted to generate a specific total force G at the spring brake piston depending on the stroke X. With respect to the total stroke of the spring brake piston, the total force G can also be adjusted by the motor force only in sections, i.e., the motor force is non-zero only for part of the stroke range of the spring brake piston, while it is zero in the remaining part of the stroke range. This includes that only in the clamping position of the spring brake piston a desired total force G is obtained by applying a motor force. In particular, the dependence of the motor force on the stroke X of the spring brake piston can be substantially linear with respect to the stroke X, at least in sections of the stroke range. Therefore, two different or identical values for the motor force can be generated for at least two different strokes, in each case in the same direction or in the opposite direction to the storage spring force.

Depending on requirements, the storage spring force can therefore be supplemented by a motor force in the same or opposite direction determined by the electronic controller, in particular as a function of the stroke X of the spring brake piston.

For this purpose, corresponding routines can be implemented as software in the electronic controller, in which, for example, the dependence of the storage spring force on the stroke X of the spring brake piston is stored as a map. Alternatively or additionally, the stroke X of the spring brake piston can also be detected by a sensor system and fed to the electronic controller for controlling the electric motor accordingly.

As a result, the control or regulation of the electric motor by means of the electronic controller results in a dosage of the total force G on the spring brake piston that can be carried out in a simple manner, in particular depending on or alternatively also independent of the stroke X of the spring brake piston. This is particularly advantageous with regard to use of the electromechanical brake actuator for an auxiliary brake or for a service brake.

Preferably, the electric motor is designed for multiple quadrant operations. The electric motor can act as a driving force in a motor operation in which the torque acts in the same direction as the speed (counterclockwise or clockwise rotation). If, on the other hand, the torque and speed have opposite directions of rotation, then the electric motor acts in a braking mode.

Particularly preferably, the electric motor is controlled by the electronic controller

a) for the force addition mode in a first quadrant, in particular in a motor mode, the rotor performing a first direction of rotation, and

b) for the force subtraction mode in a second quadrant, in particular in a motor mode, wherein the rotor executes a second direction of rotation opposite to the first direction of rotation, or in a generator mode, wherein the rotor rotates in the first direction of rotation.

Also, in the case of the electromechanical brake actuator, the electric motor can be controlled by the electronic controller.

a) be controlled to release the spring brake in order to move the spring brake piston from the clamping or applied position to a release position against the action of the storage spring, and/or

b) be controlled to apply the spring brake in order to permit and/or actively support an application or clamping movement of the spring brake piston from the release position to the clamping position.

Allowing an application or clamping movement of the spring brake piston from the release position to the clamping position can mean that the electric motor is or is de-energized at least during part of the clamping movement of the spring brake piston. In this case, the force transmission means can be designed such that a mechanical coupling between the electric motor and the spring brake piston then (continues to) exist, but, for example, a nut/spindle drive of the force transmission means is not designed to be self-locking, so that the storage spring force of the storage spring ensures that the spring brake piston can move from the release position to the clamping position, whereby a relative movement between the nut and the spindle of the nut/spindle drive can take place due to the non-self-locking property of the nut/spindle drive.

In this case, or in general, the electric motor which has been discharged up to this point can be energized and controlled by the electronic controller only when or shortly before the spring brake piston reaches the clamping or applied position, in order to generate a motor force in the same or opposite direction to the spring brake force.

Actively supporting a clamping movement of the spring brake piston from the release position to the clamping position can mean that the electric motor is energized and controlled by the electronic controller at least during the clamping movement of the spring brake piston in such a way that it has a pressing effect on the spring brake piston and the motor force acts in the same direction as the spring force. This active support can take place only during a section of the clamping movement of the spring brake piston but also during the entire clamping movement and also when the spring brake piston has reached the clamping position.

In the electromechanical brake actuator, the electric motor and/or at least some of the force transmission means can be flanged to a base or bottom of the spring brake cylinder from the outside or inside. This can be achieved, for example, by the base or bottom having a through opening into which a housing of the electric motor and/or at least part of the force transmission means projects.

Also, in the electromechanical brake actuator, the force transmission means may include a planetary gear.

Preferably, in the electromechanical brake actuator, the force transmission means comprise a nut/spindle drive with a spindle and a nut that can be screwed relative to the spindle, in particular a ball or roller screw drive. A ball or roller screw is a screw drive in which inserted balls or rollers transmit the force between the screw and the nut. Both parts each have a helical groove with a semicircular cross-section, which together form a helical tube filled with balls or rollers. The balls or rollers then form the positive connection in the thread transverse to the helix.

According to a particularly preferred embodiment of the electromechanical brake actuator, an output shaft or the rotor of the electric motor may be connected to an input shaft of the planetary gear and an output shaft of the planetary gear may be connected to the spindle of the nut/spindle drive.

Also, in the case of the nut/spindle drive, the nut can be held on the spring brake piston so that it cannot rotate.

According to a further embodiment of the electromechanical brake actuator, the spring brake piston can be connected to a spring brake piston rod which is designed and set up to act directly or indirectly on a brake mechanism in the sense of releasing or applying the spring brake. In the case of a combined brake cylinder, for example, the spring brake piston rod can also act indirectly on the brake mechanism via a service brake piston of a service brake cylinder flanged to the electromechanical brake actuator.

According to a preferred embodiment of the electromechanical brake actuator, the spring brake piston rod can be of hollow cylindrical design, with the nut/spindle drive being arranged at least partially in the interior of the hollow cylindrical spring brake piston rod. In particular, the nut of the nut/spindle drive can be held in a central through-opening of the spring brake piston, in particular in a rotationally fixed manner, and the spindle can extend into the interior of the hollow-cylindrical spring brake piston rod.

Particularly preferably, in the electromechanical brake actuator at least the storage spring, the electric motor and the force transmission means, in particular the planetary gear and the nut/spindle drive are arranged coaxially with a longitudinal center axis of the spring brake cylinder or the electromechanical brake actuator.

For example, at least part of the force transmission means in the electromechanical brake actuator, in particular the nut/spindle drive, can be designed to be self-locking or non-self-locking. The planetary gear is preferably non-self-locking.

If the nut/spindle drive is self-locking, the self-locking nut/spindle drive secures the position of the spring brake piston in each case. However, an embodiment is also possible in which the spring brake piston is locked at least in the release position, preferably by additional locking means.

The electromechanical brake actuator can also have only a single storage spring. This single storage spring can be supported, for example, on the one hand by the spring brake piston and on the other hand by the base or bottom of the spring brake cylinder.

Generally, the at least one storage spring may be received in a spring chamber bounded by a substantially cylindrical radially inner peripheral surface of the spring brake cylinder, the bottom of the spring brake cylinder, and a side of the spring brake piston.

As mentioned above, the electromechanical brake actuator may form a combined brake cylinder together with a service brake cylinder. In the combined brake cylinder, a service brake piston may be slidably disposed in a housing of the service brake cylinder, with the spring brake piston rod extending through a central bore of an intermediate wall between the service brake cylinder and the spring brake cylinder such that it acts on the service brake piston. A sealing arrangement is then accommodated in the central bore of the intermediate wall, which seals off the interior of the service brake cylinder from the interior of the spring brake cylinder.

Alternatively, the electromechanical brake actuator can also form a separate brake cylinder, particularly a service brake cylinder, which then generates a brake force, particularly a service brake force as an output force or total force G.

Preferably, by the expression "the electronic controller, the electric motor and the force transmission means interact and are designed in such a way that the total force acting on the spring brake piston is composed of the storage spring force which can be applied to the spring brake piston by the storage spring and the motor force", it is understood that these elements are configured to interact and are designed in such a way.

Similarly, for example, by the wording "the electronic controller, the electric motor and the force transmission means cooperate", it is understood that the elements are configured and/or arranged to cooperate with each other. The invention also relates to a vehicle brake of a vehicle, in particular a road vehicle, which comprises at least one electromechanical brake actuator described above, and also to a vehicle, in particular a road vehicle, with such a vehicle brake.

More details are given in the following description of an embodiment of the invention.

Drawings

An embodiment of the invention is shown below in the drawing and explained in more detail in the following description. The drawings show in

Fig. 1    a longitudinal cross-section of an electromechanical brake actuator according to a preferred embodiment of the invention with a spring brake piston in the clamping position;

Fig. 2    a longitudinal cross-section of the electromechanical brake actuator of Fig. 1 in the release position;

Fig. 3    a partial longitudinal cross section of the electromechanical brake actuator of Fig. 1 with the spring brake piston in the clamping position, where forces acting on the spring brake piston being symbolized by arrows;

Fig. 4    a force-stroke diagram of the electromechanical brake actuator of Fig. 1.

Description of the embodiment

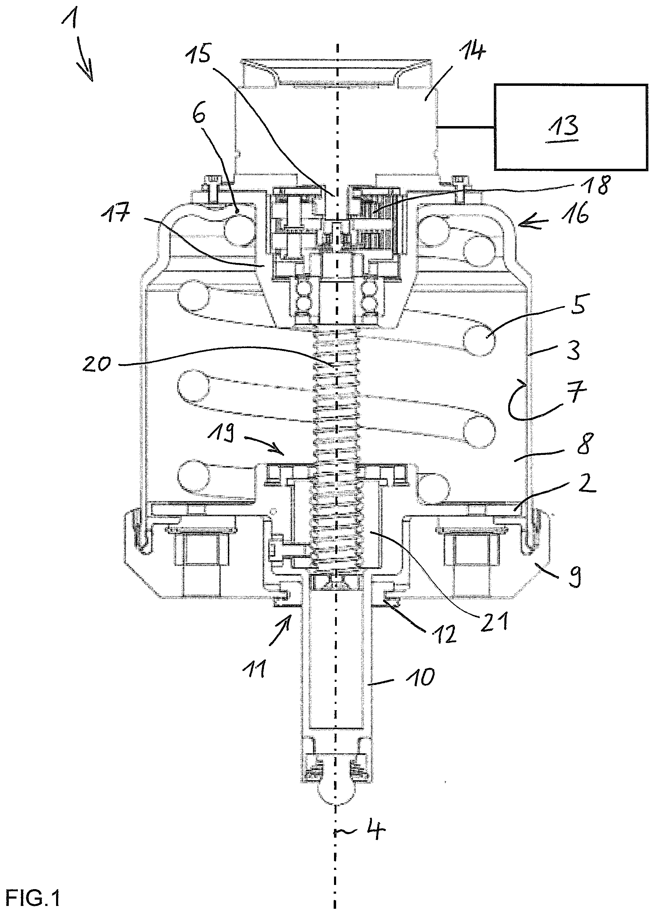

**Fig.1** shows a longitudinal cross-section of an electromechanical brake actuator 1 according to a preferred embodiment of the invention with a spring brake piston 2 in the clamping or applied position.

The electromechanical brake actuator 1 actuates a brake mechanism of a vehicle brake, which is not shown here, and comprises a spring brake cylinder 3, in which the spring brake piston 2 is arranged so as to be displaceable along a longitudinal center axis 4 of the electromechanical brake actuator 1, a storage spring 5 being supported on one side of the spring brake piston 2, which storage spring 5 is supported with its other end on a base or bottom 6 of the spring brake cylinder 3. Between the spring brake piston 2, a radially inner circumferential surface 7 and the base 6 of the spring brake cylinder 3, a spring storage chamber 8 is formed in which the storage spring 5 is accommodated. Preferably, only a single storage spring 5 is provided. Furthermore, a further base or bottom 9 is provided for the axial limitation of the spring brake cylinder 3.

For example, the electromechanical brake actuator 1 can form a combined brake cylinder with the spring brake cylinder 3 together with a service brake cylinder. Here, however, the electromechanical brake actuator 1 is preferably a separate unit without a flanged-on service brake cylinder, in which case the electromechanical brake actuator 1 can form part of a parking brake or auxiliary brake or also a service brake.

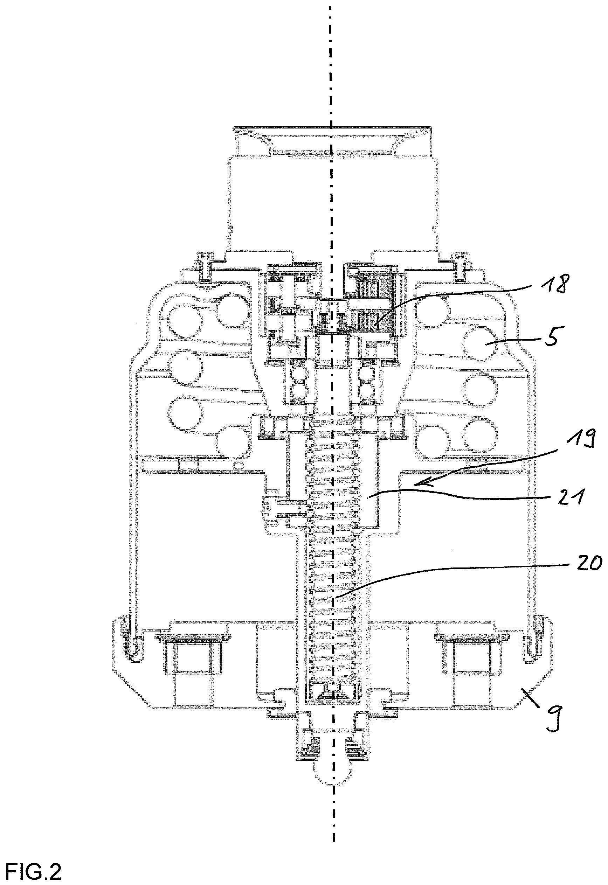

For the purpose of braking, the storage spring 5 is able to shift the spring brake piston 2 from the release position shown in **Fig. 2** to the clamping position shown in **Fig. 1.** In this process, the storage spring force $F_{spring}$ applied by the storage spring 5 acts on the brake actuating mechanism, which actuates a disc brake, for example.

The spring brake piston 2 is centrally connected to a hollow spring brake piston rod 10, which extends here, for example, through a central, sealed bore 11 of the further base or bottom 9 to the brake actuating mechanism not shown here and interacts with the latter. A sealing arrangement 12 inserted into the central bore 11 of the further base or bottom 9 seals against the spring brake piston rod 10 during its longitudinal movement.

In addition to the spring brake, the electromechanical brake actuator 1 has an electronic controller 13 and an electric motor 14 controlled by the electronic controller 13 and having a rotor 15, as well as force transmission means 16 designed and arranged for transmitting and converting the rotary motion of the rotor 15 of the electric motor 14 into a linear motion of the spring brake piston 2 and for transmitting a motor force $F_{Motor}$ of the electric motor 14 to the spring brake piston 2.

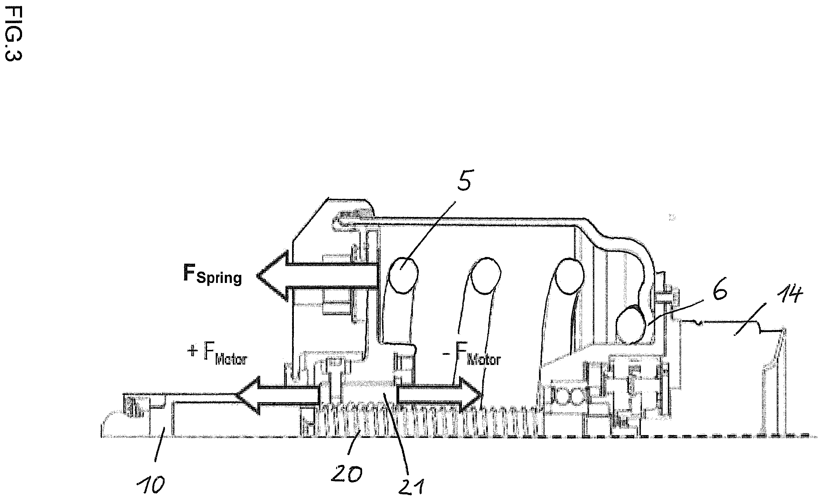

It is provided that the electronic controller 13, the electric motor 14 and the force transmission means 16 interact and are designed in such a way that, particularly at least in the clamping position of the spring brake piston 2 shown in **Fig. 1,** a total force G acting on the spring brake piston 2 is composed of the storage spring force $F_{Spring}$, which can be applied to the spring brake piston 2 by the storage spring 5, and the motor force $F_{Motor}$, the direction of the motor force being in the same or opposite direction with respect to the direction of the storage spring force $F_{Spring}$, as indicated in the equation 1 below and symbolized by the arrows in Fig. **3.**

$$G = F_{Spring} +/- F_{Motor} \qquad\qquad (1)$$

The clamping position of the spring brake piston shown in **Fig. 1** forms a first end position of the spring brake piston in which the spring brake is fully applied or clamped. In the clamping position, the spring brake piston 2 contacts, for example, the further base or bottom 9, which can also be the intermediate wall to a service brake cylinder in the case of a flange-mounted service brake cylinder.

A second end position of the spring brake piston is the release position shown in **Fig. 2,** in which the spring brake is fully released. The spring brake piston 2 then moves between the release position and the clamping position when the spring brake is released or applied/clamped.

Particularly preferably, in the electromechanical brake actuator 1 the electric motor 14 and the force transmission means 16 are flanged to the base 6 of the spring brake cylinder 3 here, for example, from the outside. This is realized here in that the base 6 of the spring brake cylinder 3 has a through opening into which a housing 17 of the electric motor and the force transmission means projects from the outside into the interior of the spring brake cylinder 3 and fastened.

The force transmission means 16 preferably comprise here a planetary gear 18, which is combined here, for example, with a nut/spindle drive 19, here in particular with a ball screw drive, which has a spindle 20 and a nut 21 that can be screwed with respect to the spindle 20. For example, the rotor 15 of the electric motor 14 is connected here to an input shaft of the planetary gear 18 and an output shaft of the planetary gear 18 is connected to the spindle 20 of the nut/spindle drive. Furthermore, the nut 21 of the nut/spindle drive 19 is held in a central bore of the spring brake piston 2 in a rotationally fixed manner and the spindle 20 projects into the hollow spring brake piston rod 10.

Particularly preferred here in the electromechanical brake actuator 1, the storage spring 5, the electric motor 14, the planetary gear 18 and the nut/spindle drive 19 are arranged coaxially to the longitudinal center axis 4.

The nut/spindle drive 19 is preferably not self-locking in this case, just as the planetary gear 18 is not self-locking, so that the storage spring force $F_{Spring}$ alone is sufficient to move the spring brake piston 2 from the release position to the clamping position without the electric motor 14 having to assist in this. Alternatively, the electric motor 14 can be controlled by the electronic controller 13 to assist this movement.

The electric motor 14 is designed for multiple quadrant operation, for example, and acts here as a driving force in a motor operation in which the torque acts in the same direction as the speed (left-hand or right-hand rotation). Furthermore, the electronic controller 13, the electric motor 14 and the force transmission means 16 interact here in such a way that the motor force $F_{Motor}$ and the storage spring force $F_{Spring}$ act in parallel on the spring brake piston 2, as symbolized by the arrows in **Fig. 3.**

Here, the electric motor 14 is controlled or regulated by the electronic controller 13 to release the spring brake in order to move the spring brake piston against the action of the storage spring 5 from the clamping position **(Fig. 1)** to the release position (Fig. 2). For this purpose, the electric motor 14 is operated or energized, for example in a first quadrant, in order to set the spindle 20 in rotation via the planetary gear 18 and the nut/spindle drive 19, as a result of which the nut 21 is screwed axially along the spindle 20 until the spring brake piston 2 has reached the release position shown in **Fig. 2.**

To apply the spring brake, the electric motor 14 is controlled by the electronic controller 13 here, for example, to permit the application movement of the spring brake piston 2 from the release position to the clamping position. For this purpose, the electric motor 14 is de-energized at least during the clamping movement of the spring brake piston 2. Since the planetary gear 18 and the nut/spindle drive 19 are not designed to be self-locking here, for example, the storage spring force $F_{Spring}$ of the storage spring 5 alone ensures that the spring brake piston 2 can move from the release position to the clamping position, whereby a relative movement can take place between the nut 21 and the spindle 20 due to the non-self-locking property of the nut/spindle drive 19.

Also by example, the electric motor 14 de-energized up to that point can be energized and controlled by the electronic controller 13 only when or shortly before the spring brake piston 2 reaches the clamping position, in order to generate a motor force $+F_{Motor}$ or an oppositely directed motor force $-F_{Motor}$ in the same direction in relation to the storage spring force $F_{Spring}$ **(Fig. 3).**

Therefore, the electronic controller 13 controls or regulates the electric motor 14 so that, preferably at least in the applied or clamping position of the spring brake piston 2 in a force addition mode, the motor force $+F_{Motor}$ then directed in the same direction is added to the storage spring force $F_{Spring}$ to generate at the spring brake piston 2 a first total force $G_1$ that is greater than the storage spring force $F_{Spring}$ that can be applied by the storage spring 5. In addition, the electronic controller 13 can control or regulate the electric motor 14, preferably at least in the applied or clamping position of the spring brake piston 2 in a force subtraction mode, to subtract the then opposing motor force $-F_{Motor}$ from the storage spring force $F_{Spring}$ to generate at the spring brake piston 2 a second total force $G_2$ that is smaller than the storage spring force $F_{Spring}$ that can be applied by the storage spring 5. In the first case, the electric motor 14 acts in a pushing manner, with the motor force $+F_{Motor}$ acting in the same direction with respect to the direction of the storage spring force $F_{Spring}$. In the second case, the electric motor 14 acts pulling, with the motor force $-F_{Motor}$ acting in the opposite direction with respect to the direction of the storage spring force $F_{Spring}$.

Therefore, the electric motor 14 is preferably operated here by the electronic controller 13 for the force addition mode in a first quadrant, in particular in a motor mode and not in a generator mode, wherein the rotor 15 executes a first direction of rotation, and for the force subtraction mode in a second quadrant, in particular in a motor mode, wherein the rotor 15 executes a second direction of rotation opposite to the first direction of rotation.

The dependence of the storage spring force $F_{Spring}$ on the stroke X of the spring brake piston 2 is usually defined or predetermined by the geometry and the material of the storage spring. However, this total force G of storage spring force $F_{Spring}$ and motor force $F_{Motor}$, can be flexibly adapted by means of appropriate control of the electric motor 14 here in particular as a function of the stroke X of the spring brake piston 2, here for example in order to keep the total force G of storage spring force $F_{Spring}$ and motor force $F_{Motor}$ constant over the whole stroke X of the spring brake piston (G = constant).

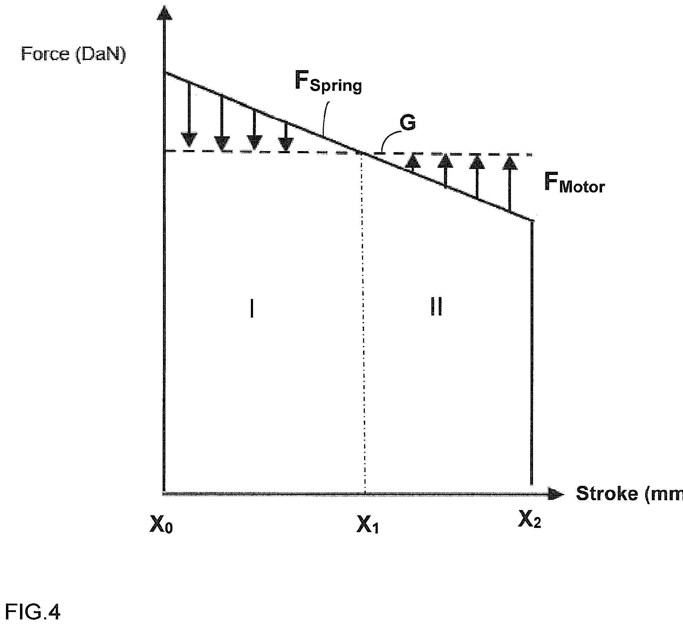

**Fig. 4** shows a force-stroke diagram of the electromechanical brake actuator 1, with the stroke X shown on the horizontal axis and the forces or the total force G on the vertical axis. The solid line shows the progression of the storage spring force $F_{Spring}$, over the stroke X of the spring brake piston 2, the dashed line shows the constant total force G desired here, and the arrows show the respective motor force $F_{Motor}$, supplemented in particular as a function of the stroke X, which is necessary to keep the total force G constant over the entire stroke X between the release position (minimum stroke $X_0$ = 0) and the clamping position (maximum stroke $X_2$) of the spring brake piston 2. In the diagram, the release position of the spring brake piston 2 therefore corresponds to a minimum stroke $X_0$ = 0 and the clamping position of the spring brake piston 2 corresponds to a maximum stroke $X_2$ of the spring brake piston 2.

The case is now assumed that the spring brake piston 2 is to be moved from the release position to the clamping position. It can be seen that here, for example, in a first stroke range I between the release position (stroke $X_0$) and a first stroke $X_1$, the electric motor 14 is controlled by the electronic controller 13 to pull, i.e. in this first stroke range I the electric motor 14 generates a motor force $-F_{Motor}$ which is directed in the opposite direction to the storage spring force $F_{Spring}$, as a result of which the motor force $-F_{Motor}$ is subtracted from the storage spring force $F_{Spring}$ at the spring brake piston 2.

From the first stroke $X_1$, the electric motor 14 is then controlled by the electronic controller 13 in a second stroke range II until the clamping position (stroke $X_2$) is reached, i.e., in this second stroke range II, the electric motor 14 generates a motor force $+F_{Motor}$ which is in the same direction as the storage spring force $F_{Spring}$, as a result of which the motor force $+F_{Motor}$ and the storage spring force $F_{Spring}$ acting on the spring brake piston 2 add up. Here, for example, also in the clamping position (stroke $X_2$), the same total force G therefore acts on the spring brake piston 2 as in the remaining stroke range I and II. It is clear, however, that the total force G can be adjusted as desired, in particular depending on the stroke X, by the electronic control 13 influencing the electric motor 14.

List of reference signs

| | |
|---|---|
| 1 | Brake actuator |
| 2 | Spring brake piston |
| 3 | Spring brake cylinder |
| 4 | Longitudinal center axis |
| 5 | Storage spring |
| 6 | Bottom |
| 7 | radial inner circumferential surface |
| 8 | Spring storage chamber |
| 9 | Further bottom |
| 10 | Spring brake piston rod |
| 11 | Bore |
| 12 | Sealing arrangement |
| 13 | Electronic controller |
| 14 | Electric motor |
| 15 | Rotor |
| 16 | Force transmission means |
| 17 | Housing |
| 18 | Planetary gear |
| 19 | Nut/spindle drive |
| 20 | Spindle |

| 21 | Mother |
|---|---|
| X | Stroke |
| $X_0$ | Stroke in the release position |
| $X_1$ | First Stroke |
| $X_2$ | Stroke in the clamping position |
| $F_{Motor}$ | Engine force |
| $F_{Spring}$ | Storage Spring force |
| G | Total force |
| $G_1$ | First total force |
| $G_2$ | Second total force |

**Claims**

1. Electromechanical brake actuator (1) for a vehicle brake of a vehicle, in particular a road vehicle, comprising at least:

   a) a spring brake having a spring brake cylinder (3) in which a spring brake piston (2) actuable by at least one storage spring (5) is displaceably arranged for applying and releasing the spring brake, the storage spring (5) applying a storage spring force ($F_{Spring}$) to the spring brake piston (2),
   b) an electronic controller (13) and at least one electric motor (14) controlled by the electronic controller (13) and having a rotor (15),
   c) force transmission means (16) which are designed and arranged for transmitting and converting the rotational movement of the rotor (15) of the electric motor (14) into a linear movement of the spring brake piston (2) and for transmitting a motor force ($F_{Motor}$) of the electric motor (14) to the spring brake piston (2), wherein
   d) the electronic controller (13), the electric motor (14) and the force transmission means (16) interact and are designed in such a way that, in particular, at least in a clamping position of the spring brake piston (2), a total force (G) acting on the spring brake piston (2) is composed of the storage spring force ($F_{Spring}$) which can be applied to the spring brake piston (2) by the storage spring (5) and the motor force ($F_{Motor}$), the direction of the motor force ($F_{Motor}$) being in the same direction or in the opposite direction to the direction of the storage spring force ($F_{Spring}$), where
   e) the electronic controller (13), the electric motor (14) and the force transmission means (16) cooperate and are designed in such a way that the motor force ($F_{Motor}$) and the storage spring force ($F_{Spring}$) act in parallel on the spring brake piston, **characterized in that**
   f) the electric motor (14) is controlled or regulated by the electronic controller (13) as a function of a stroke (X) of the spring brake piston (2) in order to change or keep constant the total force (G) from the storage spring force ($F_{Spring}$) and motor force ($F_{Motor}$) as a function of the stroke (X).

2. Electromechanical brake actuator according to claim 1, **characterized in that** the electronic controller (13), the electric motor (14) and the force transmission means (16) cooperate and are designed in such a way that, in particular at least in the clamping position of the spring brake piston (2)

   a) in a force addition mode, adding the motor force ($+F_{Motor}$) to the storage spring force ($F_{Spring}$) to generate a first total force ($G_1$) at the spring brake piston (2) which is greater than the storage spring force ($F_{Spring}$) that can be applied by the storage spring (5), or
   b) in a force subtraction mode, subtracts an opposed motor force ($-F_{Motor}$) from the storage spring force ($F_{Spring}$) to generate a second total force ($G_2$) at the spring brake piston (2) that is smaller than the storage spring force ($F_{Spring}$) that can be applied by the storage spring (5).

3. Electromechanical brake actuator according to claim 1 or 2, **characterized in that** the electric motor (14) is designed for a multiple quadrant operation.

4. Electromechanical brake actuator according to claim 3, **characterized in that** the electric motor (14) is controlled by the electronic controller (13)

   a) for the force addition mode in a first quadrant, in particular in a motor mode, the rotor (15) performing a first direction of rotation, and
   b) for the force subtraction mode in a second quadrant, in particular in a motor mode, wherein the rotor (15) executes a second direction of rotation opposite to the first direction of rotation.

5.  Electromechanical brake actuator according to any one of the preceding claims, **characterized in that** the electric motor (14) is controlled by the electronic controller (13)

    a) to release the spring brake in order to move the spring brake piston (2) against the action of the storage spring (5) from the clamping position to a release position, and/or
    b) for applying the spring brake is controlled to only permit and/or actively support an application or clamping movement of the spring brake piston (2) from the release position to a clamping position.

6.  Electromechanical brake actuator according to one of the preceding claims, **characterized in that** the electric motor (14) and/or at least part of the force transmission means (16) are flanged to a bottom (6) of the spring brake cylinder (3) from the outside or from the inside.

7.  Electromechanical brake actuator according to any one of the preceding claims, **characterized in that** the force transmission means (16) comprise a planetary gear (18).

8.  Electromechanical brake actuator according to one of the preceding claims, **characterized in that** the force transmission means (16) comprise a nut/spindle drive (19) with a spindle (20) and a nut (21) screwable with respect to the spindle (20), in particular a ball or roller screw drive.

9.  Electromechanical brake actuator according to claims 7 and 8, **characterized in that** the rotor (15) of the electric motor (14) is connected to an input shaft of the planetary gear (18) and an output shaft of the planetary gear (18) is connected to the spindle (20) of the nut/spindle drive (19).

10. Electromechanical brake actuator according to claim 8 or 9, **characterized in that** the nut (21) of the nut/spindle drive (19) is held on the spring brake piston (2) in a rotationally fixed manner.

11. Electromechanical brake actuator according to any of the preceding claims, **characterized in that** spring brake piston (2) is connected to a spring brake piston rod (10), constructed and arranged to act directly or indirectly on a brake mechanism in the sense of releasing or applying the spring brake.

12. The electromechanical brake actuator of claim 11 and any one of claims 8 to 10, **characterized in that** the spring brake piston rod (10) is hollow cylindrical, wherein the nut/spindle drive (19) is at least partially disposed inside the hollow cylindrical spring brake piston rod (10).

13. Electromechanical brake actuator according to one of the preceding claims, **characterized in that** at least the electric motor (14), the storage spring (5) and the force transmission means (16) are arranged coaxially to a longitudinal center axis (4) of the electromechanical brake actuator, and/or wherein only a single storage spring (5) is provided, and/or wherein the electromechanical brake actuator forms a separate brake actuator or, together with a service brake cylinder, a combined brake cylinder.

14. Vehicle brake of a vehicle, in particular a road vehicle, comprising at least one electromechanical brake actuator (1) according to one of the preceding claims.

15. Vehicle, in particular road vehicle, with a vehicle brake according to claim 14.

**Patentansprüche**

1.  Elektromechanische Bremsbetätigungsvorrichtung (1) für eine Fahrzeugbremse eines Fahrzeugs, insbesondere eines Straßenfahrzeugs, die mindestens Folgendes umfasst:

    a) eine Federbremse, die einen Federbremszylinder (3) aufweist, in dem ein durch mindestens eine Speicherfeder (5) betätigbarer Federbremskolben (2) zum Anwenden und Lösen der Federbremse verschiebbar angeordnet ist, wobei die Speicherfeder (5) eine Speicherfederkraft ($F_{Feder}$) auf den Federbremskolben (2) anwendet,
    b) eine elektronische Steuereinheit (13) und mindestens einen von der elektronischen Steuereinheit (13) gesteuerten Elektromotor (14), der einen Rotor (15) aufweist,
    c) Kraftübertragungsmittel (16), die so ausgelegt und angeordnet sind, dass sie die Drehbewegung des Rotors (15) des Elektromotors (14) in eine lineare Bewegung des Federbremskolbens (2) umwandeln und eine Motorkraft ($F_{Motor}$) des Elektromotors (14) auf den Federbremskolben (2) übertragen, wobei

d) die elektronische Steuereinheit (13), der Elektromotor (14) und die Kraftübertragungsmittel (16) derart interagieren und ausgelegt sind, dass insbesondere mindestens in einer Klemmstellung des Federbremskolbens (2) eine Gesamtkraft (G), die auf den Federbremskolben (2) wirkt, sich aus der Speicherfederkraft ($F_{Feder}$), die von der Speicherfeder (5) auf den Federbremskolben (2) angewendet werden kann, und der Motorkraft ($F_{Motor}$) zusammensetzt, wobei die Richtung der Motorkraft ($F_{Motor}$) in der gleichen oder entgegengesetzten Richtung zur Richtung der Speicherfederkraft ($F_{Feder}$) ist, wobei

e) die elektronische Steuereinheit (13), der Elektromotor (14) und die Kraftübertragungsmittel (16) derart zusammenwirken und ausgelegt sind, dass die Motorkraft ($F_{Motor}$) und die Speicherfederkraft ($F_{Feder}$) parallel auf den Federbremskolben wirken, **dadurch gekennzeichnet, dass**

f) der Elektromotor (14) von der elektronischen Steuereinheit (13) als eine Funktion eines Hubs (X) des Federbremskolbens (2) gesteuert oder geregelt wird, um die Gesamtkraft (G) aus der Speicherfederkraft ($F_{Feder}$) und der Motorkraft ($F_{Motor}$) als eine Funktion des Hubs (X) zu ändern oder konstant zu halten.

2. Elektromechanische Bremsbetätigungsvorrichtung nach Anspruch 1, **dadurch gekennzeichnet, dass** die elektronische Steuereinheit (13), der Elektromotor (14) und die Kraftübertragungsmittel (16) derart zusammenwirken und ausgelegt sind, dass insbesondere mindestens in der Klemmposition des Federbremskolbens (2)

a) in einem Kraftadditionsmodus die Motorkraft (+$F_{Motor}$) zur Speicherfederkraft ($F_{Feder}$) addiert wird, um eine erste Gesamtkraft ($G_1$) am Federbremskolben (2) zu erzeugen, die größer ist als die Speicherfederkraft ($F_{Feder}$), die von der Speicherfeder (5) angewendet werden kann, oder

b) in einem Kraftsubtraktionsmodus eine entgegenwirkende Motorkraft (-$F_{Motor}$) von der Speicherfederkraft ($F_{Feder}$) subtrahiert wird, um eine zweite Gesamtkraft ($G_2$) am Federbremskolben (2) zu erzeugen, die kleiner ist als die Speicherfederkraft ($F_{Feder}$), die von der Speicherfeder (5) angewendet werden kann.

3. Elektromechanische Bremsbetätigungsvorrichtung nach Anspruch 1 oder 2, **dadurch gekennzeichnet, dass** der Elektromotor (14) für einen Mehrquadrantenbetrieb ausgelegt ist.

4. Elektromechanische Bremsbetätigungsvorrichtung nach Anspruch 3, **dadurch gekennzeichnet, dass** der Elektromotor (14) von der elektronischen Steuereinheit (13) gesteuert wird

a) für den Kraftadditionsmodus in einem ersten Quadranten, insbesondere in einem Motormodus, wobei der Rotor (15) eine erste Drehrichtung durchführt, und

b) für den Kraftsubtraktionsmodus in einem zweiten Quadranten, insbesondere in einem Motormodus, wobei der Rotor (15) eine zweite, der ersten Drehrichtung entgegengesetzte Drehrichtung durchführt.

5. Elektromechanische Bremsbetätigungsvorrichtung nach einem der vorstehenden Ansprüche, **dadurch gekennzeichnet, dass** der Elektromotor (14) von der elektronischen Steuereinheit (13) gesteuert wird,

a) damit die Federbremse gelöst wird, um den Federbremskolben (2) entgegen der Wirkung der Speicherfeder (5) von der Klemmposition in eine Löseposition zu bewegen, und/oder

b) damit Anwenden der Federbremse so gesteuert wird, dass sie nur eine Anwendungs- oder Klemmbewegung des Federbremskolbens (2) von der Löseposition in eine Klemmposition zulässt und/oder aktiv unterstützt.

6. Elektromechanische Bremsbetätigungsvorrichtung nach einem der vorstehenden Ansprüche, **dadurch gekennzeichnet, dass** der Elektromotor (14) und/oder mindestens ein Teil der Kraftübertragungsmittel (16) von außen oder von innen an einen Boden (6) des Federspeicherbremszylinders (3) angeflanscht ist.

7. Elektromechanische Bremsbetätigungsvorrichtung nach einem der vorstehenden Ansprüche, **dadurch gekennzeichnet, dass** die Kraftübertragungsmittel (16) ein Planetengetriebe (18) umfassen.

8. Elektromechanische Bremsbetätigungsvorrichtung nach einem der vorstehenden Ansprüche, **dadurch gekennzeichnet, dass** die Kraftübertragungsmittel (16) einen Mutter-/Spindel-Antrieb (19) mit einer Spindel (20) und einer auf die Spindel (20) schraubbaren Mutter (21), insbesondere einen Kugel- oder Rollengewindetrieb umfassen.

9. Elektromechanische Bremsbetätigungsvorrichtung nach den Ansprüchen 7 und 8, **dadurch gekennzeichnet, dass** der Rotor (15) des Elektromotors (14) mit einer Eingangswelle des Planetengetriebes (18) und eine Abtriebswelle des Planetengetriebes (18) mit der Spindel (20) des Mutter-/Spindel-Antriebs (19) verbunden ist.

**EP 4 523 984 B1**

10. Elektromechanische Bremsbetätigungsvorrichtung nach Anspruch 8 oder 9, **dadurch gekennzeichnet, dass** die Mutter (21) des Mutter-/Spindel-Antriebs (19) auf eine drehfeste Weise am Federbremskolben (2) gehalten wird.

11. Elektromechanische Bremsbetätigungsvorrichtung nach einem der vorstehenden Ansprüche, **dadurch gekennzeichnet, dass** der Federbremskolben (2) mit einer Federbremskolbenstange (10) verbunden ist, die so konstruiert und angeordnet ist, dass sie direkt oder indirekt auf einen Bremsmechanismus im Sinne des Lösens oder Anwendens der Federbremse einwirkt.

12. Elektromechanische Bremsbetätigungsvorrichtung nach Anspruch 11 und einem der Ansprüche 8 bis 10, **dadurch gekennzeichnet, dass** die Federbremskolbenstange (10) hohlzylindrisch ist, wobei der Mutter-/Spindel-Antrieb (19) zumindest teilweise innerhalb der hohlzylindrischen Federbremskolbenstange (10) angeordnet ist.

13. Elektromechanische Bremsbetätigungsvorrichtung nach einem der vorstehenden Ansprüche, **dadurch gekennzeichnet, dass** mindestens der Elektromotor (14), die Speicherfeder (5) und die Kraftübertragungsmittel (16) koaxial zu einer Längsmittelachse (4) der elektromechanischen Bremsbetätigungsvorrichtung angeordnet sind, und/oder wobei nur eine einzige Speicherfeder (5) bereitgestellt ist, und/oder wobei der elektromechanische Bremsbetätigungsvorrichtung eine separate Bremsbetätigungsvorrichtung oder zusammen mit einem Betriebsbremszylinder einen kombinierten Bremszylinder bildet.

14. Fahrzeugbremse eines Fahrzeugs, insbesondere eines Straßenfahrzeugs, das mindestens eine elektromechanische Bremsbetätigungsvorrichtung (1) nach einem der vorstehenden Ansprüche umfasst.

15. Fahrzeug, insbesondere Straßenfahrzeug, mit einer Fahrzeugbremse nach Anspruch 14.

**Revendications**

1. Actionneur de frein électromécanique (1) pour un frein de véhicule d'un véhicule, en particulier d'un véhicule routier, comprenant au moins :

a) un frein à ressort présentant un cylindre de frein à ressort (3) dans lequel un piston de frein à ressort (2) actionnable par au moins un ressort de rappel (5) est agencé de manière à pouvoir être déplacé pour appliquer et libérer le frein à ressort, le ressort de rappel (5) appliquant une force de ressort de rappel ($F_{Spring}$) sur le piston de frein à ressort (2),
b) un dispositif de commande électronique (13) et au moins un moteur électrique (14) commandé par le dispositif de commande électronique (13) et présentant un rotor (15),
c) des moyens de transmission de force (16) qui sont conçus et agencés pour transmettre et convertir le mouvement de rotation du rotor (15) du moteur électrique (14) en un mouvement linéaire du piston de frein à ressort (2) et pour transmettre une force motrice ($F_{Motor}$) du moteur électrique (14) au piston de frein à ressort (2), dans lequel
d) le dispositif de commande électronique (13), le moteur électrique (14) et les moyens de transmission de force (16) interagissent et sont conçus de telle sorte que, en particulier, au moins dans une position de serrage du piston de frein à ressort (2), une force totale (G) agissant sur le piston de frein à ressort (2) soit composée de la force de ressort de rappel ($F_{Spring}$) qui peut être appliquée sur le piston de frein à ressort (2) par le ressort de rappel (5) et de la force motrice ($F_{Motor}$), la direction de la force motrice ($F_{Motor}$) étant la même direction ou la direction opposée à la direction de la force de ressort de rappel ($F_{Spring}$), où
e) le dispositif de commande électronique (13), le moteur électrique (14) et les moyens de transmission de force (16) coopèrent et sont conçus de telle sorte que la force motrice ($F_{Motor}$) et la force de ressort de rappel ($F_{Spring}$) agissent en parallèle sur le piston de frein à ressort, **caractérisé en ce que**
f) le moteur électrique (14) est commandé ou régulé par le dispositif de commande électronique (13) en fonction d'une course (X) du piston de frein à ressort (2) afin de modifier ou de maintenir constante la force totale (G) provenant de la force de ressort de rappel ($F_{Spring}$) et de la force motrice ($F_{Motor}$) en fonction de la course (X).

2. Actionneur de frein électromécanique selon la revendication 1, **caractérisé en ce que** le dispositif de commande électronique (13), le moteur électrique (14) et les moyens de transmission de force (16) coopèrent et sont conçus de telle sorte que, en particulier au moins dans la position de serrage du piston de frein à ressort (2)

a) dans un mode d'addition de forces, l'addition de la force motrice (+$F_{Motor}$) à la force de ressort de rappel

($F_{Spring}$) pour générer une première force totale ($G_1$) au niveau du piston de frein à ressort (2) qui est supérieure à la force de ressort de rappel ($F_{Spring}$) qui peut être appliquée par le ressort de rappel (5), ou

b) dans un mode de soustraction de force, soustrait une force motrice opposée (-$F_{Motor}$) de la force de ressort de rappel ($F_{Spring}$) pour générer une seconde force totale ($G_2$) au niveau du piston de frein à ressort (2) qui est inférieure à la force de ressort de rappel ($F_{Spring}$) qui peut être appliquée par le ressort de rappel (5).

3. Actionneur de frein électromécanique selon la revendication 1 ou 2, **caractérisé en ce que** le moteur électrique (14) est conçu pour un fonctionnement à plusieurs quadrants.

4. Actionneur de frein électromécanique selon la revendication 3, **caractérisé en ce que** le moteur électrique (14) est commandé par le dispositif de commande électronique (13)

a) pour le mode d'addition de forces dans un premier quadrant, en particulier dans un mode moteur, le rotor (15) effectuant une première direction de rotation, et

b) pour le mode de soustraction de force dans un second quadrant, en particulier dans un mode moteur, dans lequel le rotor (15) exécute une seconde direction de rotation opposée à la première direction de rotation.

5. Actionneur de frein électromécanique selon l'une quelconque des revendications précédentes, **caractérisé en ce que** le moteur électrique (14) est commandé par le dispositif de commande électronique (13)

a) pour libérer le frein à ressort afin de déplacer le piston de frein à ressort (2) contre l'action du ressort de rappel (5) de la position de serrage à une position de libération, et/ou

b) pour l'application le frein à ressort est commandé uniquement pour permettre et/ou soutenir activement un mouvement d'application ou de serrage du piston de frein à ressort (2) de la position de libération à une position de serrage.

6. Actionneur de frein électromécanique selon l'une des revendications précédentes, **caractérisé en ce que** le moteur électrique (14) et/ou au moins une partie des moyens de transmission de force (16) sont fixés par une bride à un fond (6) du cylindre de frein à ressort (3) de l'extérieur ou de l'intérieur.

7. Actionneur de frein électromécanique selon l'une quelconque des revendications précédentes, **caractérisé en ce que** les moyens de transmission de force (16) comprennent un engrenage planétaire (18).

8. Actionneur de frein électromécanique selon l'une des revendications précédentes, **caractérisé en ce que** les moyens de transmission de force (16) comprennent un entraînement à écrou/broche (19) avec une broche (20) et un écrou (21) vissable par rapport à la broche (20), en particulier un entraînement à vis à billes ou à rouleaux.

9. Actionneur de frein électromécanique selon les revendications 7 et 8, **caractérisé en ce que** le rotor (15) du moteur électrique (14) est relié à un arbre d'entrée de l'engrenage planétaire (18) et un arbre de sortie de l'engrenage planétaire (18) est relié à la broche (20) de l'entraînement à écrou/broche (19).

10. Actionneur de frein électromécanique selon la revendication 8 ou 9, **caractérisé en ce que** l'écrou (21) de l'entraînement à écrou/broche (19) est maintenu sur le piston de frein à ressort (2) de manière fixe en rotation.

11. Actionneur de frein électromécanique selon l'une quelconque des revendications précédentes, **caractérisé en ce que** le piston de frein à ressort (2) est relié à une tige de piston de frein à ressort (10), construite et agencée pour agir directement ou indirectement sur un mécanisme de frein dans le sens de la libération ou de l'application du frein à ressort.

12. Actionneur de frein électromécanique selon la revendication 11 et l'une quelconque des revendications 8 à 10, **caractérisé en ce que** la tige de piston de frein à ressort (10) est cylindrique creuse, dans lequel l'entraînement à écrou/broche (19) est au moins partiellement disposé à l'intérieur de la tige de piston de frein à ressort cylindrique creuse (10).

13. Actionneur de frein électromécanique selon l'une des revendications précédentes, **caractérisé en ce qu'**au moins le moteur électrique (14), le ressort de rappel (5) et les moyens de transmission de force (16) sont agencés coaxialement par rapport à un axe central longitudinal (4) de l'actionneur de frein électromécanique, et/ou dans lequel un seul ressort de rappel (5) est prévu, et/ou dans lequel l'actionneur de frein électromécanique forme un actionneur de frein séparé ou, conjointement avec un cylindre de frein de service, un cylindre de frein combiné.

14. Frein de véhicule d'un véhicule, en particulier d'un véhicule routier, comprenant au moins un actionneur de frein électromécanique (1) selon l'une des revendications précédentes.

15. Véhicule, en particulier véhicule routier, avec un frein de véhicule selon la revendication 14.

FIG.1

FIG.2

FIG.3

FIG.4

**EP 4 523 984 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2566734 B1
- US 2021253078 A1
- US 2010078274 A1
- US 6267207 B1
- US 6722477 B1
- US 2010082213 A1